(19) Europäisches Patentamt
European Patent Office
Office européen des brevets

(11) **EP 2 506 564 A1**

(12) **EUROPEAN PATENT APPLICATION**

(43) Date of publication:
**03.10.2012 Bulletin 2012/40**

(51) Int Cl.:
***H04N 5/357*** (2011.01)

(21) Application number: **12161186.7**

(22) Date of filing: **26.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.03.2011 JP 2011069774**

(71) Applicant: **FUJIFILM Corporation
Tokyo (JP)**

(72) Inventor: **Tanaka, Yasutake
Kanagawa (JP)**

(74) Representative: **Klunker . Schmitt-Nilson . Hirsch
Patentanwälte
Destouchesstrasse 68
80796 München (DE)**

(54) **Imaging device, imaging method, imaging program and computer readable storage medium**

(57)     There is provided an imaging device that has: an image pick-up element that picks-up an image of a subject and transfers an image pick-up signal that has been picked-up; cooling means for cooling the image pick-up element; a temperature sensor that detects a temperature of the image pick-up element; pulse width modulation control means for controlling the cooling means by a pulse width modulation signal, on the basis of the temperature detected by the temperature sensor; and transfer control means for, on the basis of a duty ratio of the pulse width modulation signal, controlling transfer of the image pick-up signal such that transfer of the image pick-up signal is suspended at a timing that includes at least one of a rise and a fall of the pulse width modulation signal.

FIG.4

**Description**

BACKGROUND

Technical Field

The present invention relates to an imaging device, an imaging program, an imaging method, and a computer readable storage medium, and in particular, relates to an imaging device, an imaging program, an imaging method, and a computer readable storage medium having cooling means for cooling an image pick-up element.

Related Art

In the field of biochemistry for example, there has conventionally been proposed an imaging device that picks-up, as a subject, a fluorescent sample that emits fluorescent light due to excitation light being illuminated and is labeled by a fluorescent dye, or picks-up, as a subject, a chemiluminescent sample that contacts a chemiluminescent substrate and emits light (see, for example, Japanese Patent Application Laid-Open (JP-A) No. 2005-283322).

In such an imaging device, when imaging a chemiluminescent sample in particular, in order to capture an image of a subject that emits faint light without illuminating excitation light, the exposure time is a long time as compared with a case of capturing an image of a fluorescent sample. When the exposure time is long, many noise components, that correspond to temperature and the exposure time, are included in a captured image that is captured by an image pick-up element such as a CCD or the like. In order to prevent this, the imaging device of JP-A No. 2005-283322 is provided with means for cooling the CCD.

In the case of a structure that includes cooling means for cooling an image pick-up element in this way, when the timing of the control of the cooling means overlaps with the transfer of the image pick-up signal from the image pick-up element, there are cases in which power loss occurs and noise becomes mixed-in with the image pick-up signal.

In order to prevent this, JP-A No. 2-113680 discloses a technique of, in a solid-state image pick-up device that PWM-controls (pulse width modulation controls) a Peltier element that serves as a cooling means in accordance with the temperature of the image pick-up element, switching the on/off state of the pulse signal of the PWM control during the vertical or horizontal blanking period of the image pick-up element.

Further, JP-A No. 2002-290840 discloses the following technique in an image pick-up device that carries out driving control of a cooling element on the basis of an H/L level signal from a temperature sensor: the output signal from the temperature sensor becomes H level, and thereafter, the power supply of the cooling element is controlled so as to be turned on at the timing when an image pick-up element blanking signal becomes H level. Due thereto, noise becoming mixed-in with the image signal due to the current value fluctuating greatly due to the cooling element being turned on, is prevented.

Further, JP-A No. 2008-29816 discloses a technique in which, in order to prevent generation of noise due to the driving of a cooling portion, such as a cooling fan or a Peltier element or the like, during an image read-out time period, the cooling portion is not operated during the image read-out time period, and is operated during a time period other than the image read-out time period.

However, all of the techniques disclosed in the above-described patent documents are for preventing effects, such as noise becoming mixed-in with the image pick-up signal or the like, by shifting the timing of the cooling by the cooling means. Therefore, there is the problem that there is the concern that, when the driving time of the image pick-up element is long, such as, in particular, in the case of continuous imaging or the like, the temperature of the image pick-up element may rise too much, or conversely, may fall too much.

SUMMARY

The present invention was made in order to overcome the above-described problem, and an object thereof is to provide an imaging device, an imaging program, an imaging method, and a computer readable storage medium that, while controlling an image pick-up element to an appropriate temperature, can prevent noise from becoming mixed-in with a captured image.

An imaging device relating to a first aspect of the present invention has: an image pick-up element that picks-up an image of a subject, and transfers an image pick-up signal that has been picked-up; cooling means for cooling the image pick-up element; a temperature sensor that detects a temperature of the image pick-up element; pulse width modulation control means for controlling the cooling means by a pulse width modulation signal, on the basis of the temperature detected by the temperature sensor; and transfer control means for controlling transfer of the image pick-up signal such that transfer of the image pick-up signal is suspended at a timing that includes at least one of a rise and a fall of the pulse width modulation signal.

A computer program relating to a fifth aspect of the present invention is for causing a computer to function as the pulse width modulation control means and the transfer control means of any one of first to fourth aspects.

An imaging method relating to a sixth aspect of the present invention includes: on the basis of a temperature that is detected by a temperature sensor that detects a temperature of an image pick-up element that picks-up an image of a subject and transfers an image pick-up signal that has been picked-up, controlling a cooling means for cooling the image pick-up element by a pulse width modulation signal; and controlling transfer of the image pick-up signal such that transfer of the image pick-up signal is suspended at a timing that includes at least one of a rise and a fall of the pulse width modulation signal.

According to a seventh aspect of the present invention, a computer-readable storage medium storing a program for causing a computer to execute an imaging method, the imaging method including: on the basis of a temperature that is detected by a temperature sensor that detects a temperature of an image pick-up element that picks-up an image of a subject and transfers an image pick-up signal that has been picked-up, controlling a cooling means for cooling the image pick-up element by a pulse width modulation signal; and controlling transfer of the image pick-up signal such that transfer of the image pick-up signal is suspended at a timing that includes at least one of a rise and a fall of the pulse width modulation signal.

BRIEF DESCRIPTION OF THE DRAWINGS

An exemplary embodiment of the present invention will be described in detail based on the following figures, wherein:

    Fig. 1 is a perspective view of an imaging system;
    Fig. 2 is a front view of an imaging device;
    Fig. 3 is a schematic block diagram of an image processing device 100;
    Fig. 4 is a schematic block diagram of an imaging section 30;
    Fig. 5 is a flowchart of a control routine that is executed at a controller 80 of the imaging section 30;
    Fig. 6 (1) is a waveform diagram of an image pick-up signal, and (2) is a waveform diagram of a PWM control signal; and
    Fig. 7 (1) is a waveform diagram of an image pick-up signal, and (2) is a waveform diagram of a PWM control signal.

DETAILED DESCRIPTION

An exemplary embodiment of the present invention is described hereinafter with reference to the drawings.

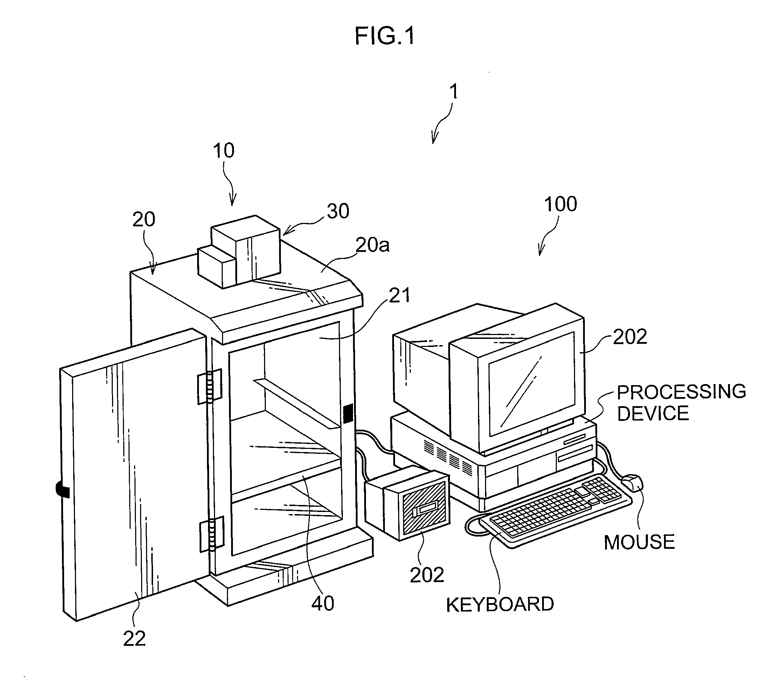

Fig. 1 is a perspective view showing an example of an imaging system that uses an imaging device relating to the present invention. An imaging system 1 is an imaging system that images a subject without illuminating excitation light or by illuminating excitation light in accordance with the subject, and acquires a captured image of the subject. The imaging system 1 is structured to include an imaging device 10 and an image processing device 100.

The imaging device 10 outputs, to the image processing device 100, image data of the subject that is obtained by imaging the subject. The image processing device 100 subjects the received image data to predetermined image processings as needed, and displays the image data on a display 202.

Note that the subject may be, for example, the aforementioned chemiluminescent sample, or may be a fluorescent sample, but is not limited to these.

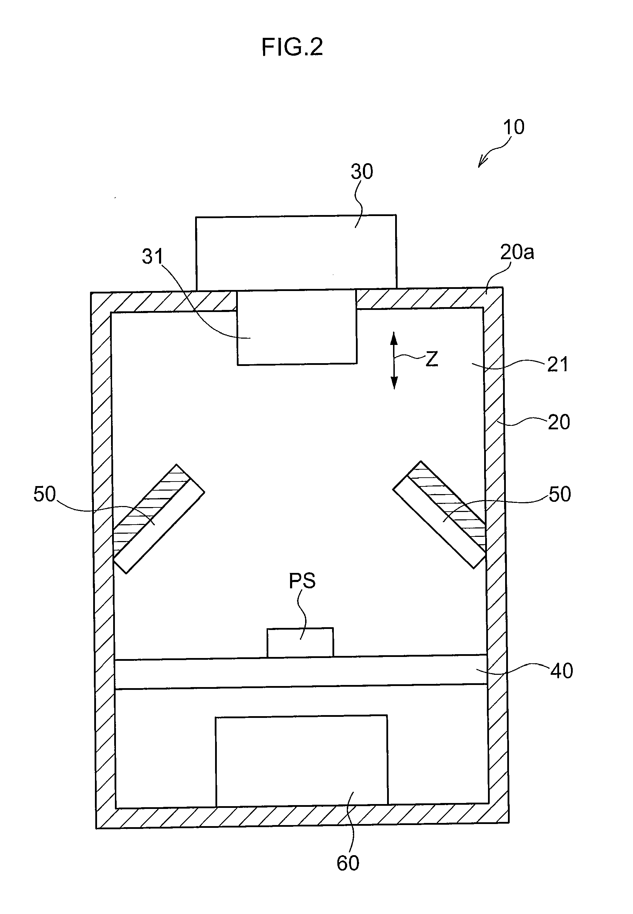

A front view of a state in which a cover 22 (see Fig. 1) of the imaging device 10 is open is shown in Fig. 2. As shown in Fig. 2, the imaging device 10 has a subject placement portion 40 on which a subject PS is placed, a housing 20 that accommodates therein the subject placement portion 40, an imaging section 30 that images the subject PS that is placed on the subject placement portion 40, epi-illumination light sources 50 that are disposed within the housing 20 and illuminate excitation light onto the subject PS, and a transmission light source 60.

The housing 20 has a hollow portion 21 that is formed in a substantially parallelepiped shape, and has, at the interior thereof, the subject placement portion 40 on which the subject PS is placed. The cover 22 shown in Fig. 1 is mounted to the housing 20 so as to be able to open and close. A user opens the cover 22 and can accommodate the subject PS within the housing 20. In this way, the housing 20 structures a dark box such that external light does not enter into the hollow portion 21.

The imaging device 10 is fixed to a top surface 20a of the housing 20. Although details thereof are described later, the imaging device 10 is structured to include an image pick-up element such as a CCD or the like for example. A cooling element is mounted to the image pick-up element. By cooling the image pick-up element, noise components due to dark current are prevented from being included in the captured image information.

A lens section 31 is mounted to the imaging device 10. The lens section 31 is mounted so as to be movable in the direction of arrow Z, in order to adjust the focus on the subject PS.

The epi-illumination light sources 50 illuminate excitation light toward the subject PS that is disposed on the subject placement portion 40. The transmission light source 60 illuminates excitation light from beneath the subject PS. When a fluorescent sample is imaged, excitation light is illuminated onto the subject from at least one of the epi-illumination light sources 50 and the transmission light source 60, in accordance with the subject.

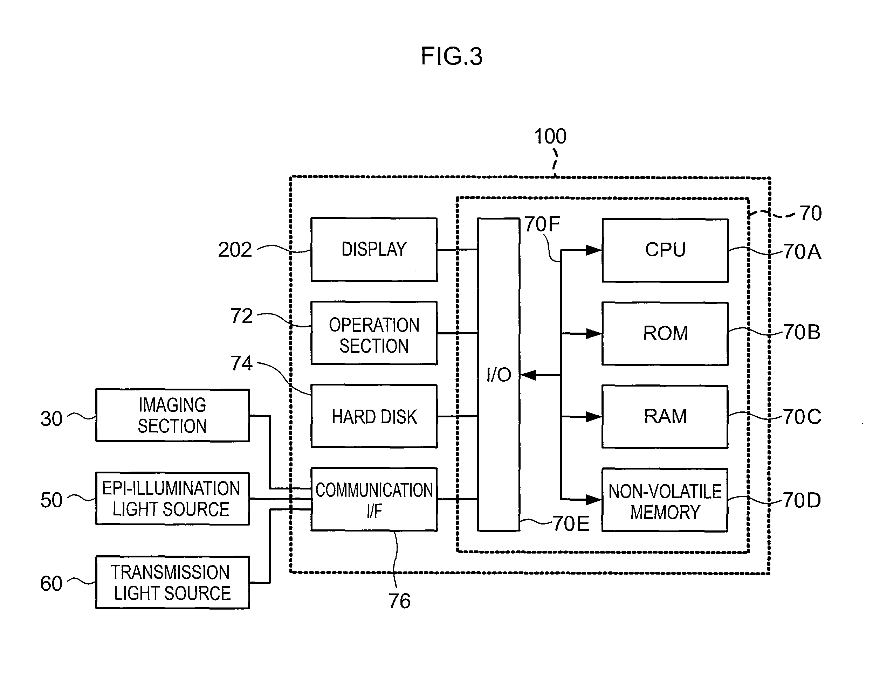

The schematic structure of the image processing device 100 is shown in Fig. 3. As shown in Fig. 3, the image processing device 100 is structured to include a main controller 70.

The main controller 70 is structured by a CPU (Central Processing Unit) 70A, a ROM (Read Only Memory) 70B, a RAM (Random Access Memory) 70C, a nonvolatile memory 70D and an input/output interface (I/O) 70E respectively being connected via a bus 70F.

The display 202, an operation section 72, a hard disk 74, and a communication I/F 76 are connected to the I/O 70E. The main controller 70 collectively controls these respective functional sections.

The display 202 is structured by, for example, a CRT, a liquid crystal display device, or the like, and displays images captured at the imaging device 10, and displays screens for carrying out various types of settings and instructions with respect to the imaging device 10, and the like.

The operation section 72 is structured to include a mouse, a keyboard and the like, and is for a user to give various types of instructions to the imaging device 10 by operating the operation section 72.

The hard disk 74 stores image data of the captured images that are captured at the imaging device 10, control programs, various types of data needed for control, and the like.

The communication interface (I/F) 76 is connected to the imaging section 30, the epi-illumination light sources 50 and the transmission light source 60 of the imaging device 10. Via the communication I/F 76, the CPU 70A instructs the imaging section 30 to carry out imaging under imaging conditions that correspond to the type of the subject, and, when excitation light is to be illuminated onto the subject, instructs at least one of the epi-illumination light sources 50 and the transmission light source 60 to illuminate excitation light, and receives image data of the image captured at the imaging section 30 and carries out image processings and the like thereon.

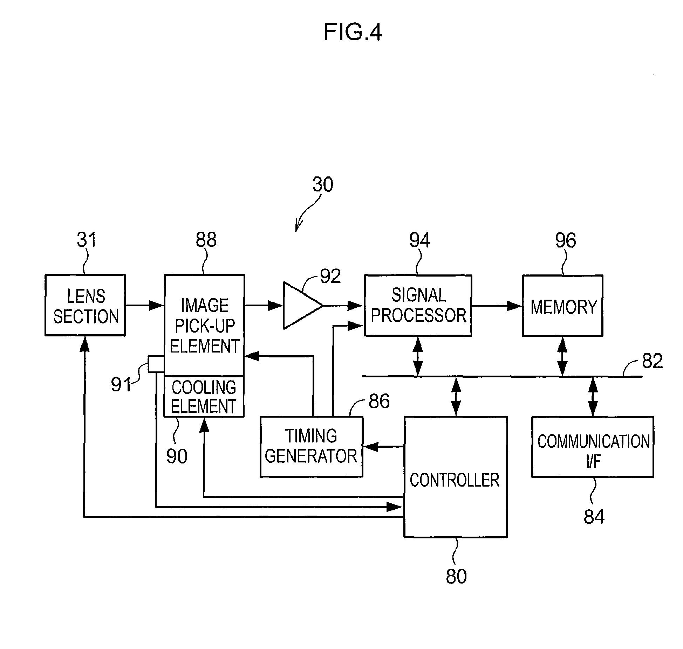

The schematic structure of the imaging section 30 is shown in Fig. 4. As shown in Fig. 4, the imaging section 30 has a controller 80 (pulse width modulation control means, transfer control means), and the controller 80 is connected to a communication interface (I/F) 84 via a bus 82. The communication I/F 84 is connected to the communication I/F 76 of the image processing device 100.

When image capturing is instructed from the image processing device 100 via the communication I/F 84, the controller 80 controls the respective sections in accordance with the contents of the instruction, and images the subject PS that is disposed on the subject placement portion 40, and transmits the image data of the captured image thereof to the image processing device 100 via the communication I/F 84.

The lens section 31, a timing generator 86 (transfer control means), a cooling element 90 (cooling means) that cools an image pick-up element 88, and a temperature sensor 91 that detects the temperature of the image pick-up element 88, are connected to the controller 80.

The controller 80 is structured by a computer that includes, for example, a CPU, a ROM, a RAM, a non-volatile ROM, and the like that are not shown. A control program that is described later is stored in the non-volatile ROM. Due to the CPU reading-in and executing the control program, the controller 80 controls the respective sections that are connected to the controller 80.

Although not illustrated, the lens section 31 is structured to include, for example, a lens group formed from plural optical lenses, a diaphragm adjusting mechanism, a zoom mechanism, an automatic focusing mechanism, and the like. The lens group is provided so as to be movable in the direction of arrow Z in order to adjust the focus on the subject PS in Fig. 2. The diaphragm adjusting mechanism varies the diameter of an aperture and adjusts the amount of light that is incident on the image pick-up element 88. The zoom mechanism adjusts the position at which the lens is disposed and carries out zooming. The automatic focusing mechanism carries out focus adjustment in accordance with the distance between the subject PS and the imaging device 10.

The light from the subject PS is transmitted through the lens section 31 and focused on the image pick-up element 88 as a subject image.

Although not illustrated, the image pick-up element 88 is structured to include light-receiving portions that correspond respectively to plural pixels, horizontal transfer paths, vertical transfer paths, and the like. The image pick-up element 88 has the function of photoelectrically converting the subject image, that is focused on the image pick-up surface thereof, into electric signals. For example, an image sensor such as a charge coupled device (CCD), a metal oxide semiconductor (MOS), or the like is used for the image pick-up element 88.

The image pick-up element 88 is controlled by timing signals from the timing generator 86, and, at the respective light-receiving portions, photoelectrically-converts the incident light from the subject PS.

The signal charges that are photoelectrically-converted at the image pick-up element 88 become analog signals that are voltage-converted by a charge-voltage conversion amplifier 92, and are outputted to a signal processor 94.

The timing generator 86 has an oscillator that generates a basic clock (system clock) that operates the imaging section 30. For example, the timing generator 86 supplies the basic clock to the respective sections, and frequency-divides the basic clock and generates various timing signals. For example, the timing generator 86 generates a vertical synchronization signal, a horizontal synchronization signal, and a timing signal that expresses the electronic shutter pulse or the like, and supplies these signals to the image pick-up element 88. Further, the timing generator 86 generates timing signals such as a sampling pulse for correlated double sampling, a conversion clock for analog/digital conversion, and the like, and supplies the timing signals to the signal processor 94.

The signal processor 94 is controlled by the timing signals from the timing generator 86, and is structured to include a correlated double sampling (CDS) circuit that carries out correlated double sampling processing on the inputted analog signal, and an analog/digital (A/D) converter that converts the analog signal, on which the correlated double sampling processing was carried out, into a digital signal, and the like. Or, the signal processor 94 is structured to include a processor that A/D samples a feed-through portion and a signal portion, and carries out the processing of computing difference data of the respective digital values of the feed-through portion and the signal portion.

Correlated double sampling processing is a processing that obtains pixel data by obtaining the difference between the level of the feed-through portion and the level of the signal portion corresponding to the image portion, that are included in the output signal of each one image-receiving element (pixel) of the image pick-up element 88, for the purpose of reducing noise and the like that is included in the output signals of the image pick-up element 88.

The digital signal, that has been subjected to the correlated double sampling processing, is outputted to the memory 96 and primarily stored therein. The image data that is primarily stored in the memory 96 is transmitted to the image processing device 100 via the communication I/F 84.

The cooling element 90 is structured by, for example, a Peltier element or the like, and the cooling temperature thereof is controlled by the controller 80. When the subject PS is a chemiluminescent sample, imaging is carried out without excitation light being illuminated and with the exposure time being relatively long. Therefore, there are cases in which the temperature of the image pick-up element 88 rises and the image quality is adversely affected due to an increase in dark current or the like. Thus, at the controller 80, the cooling element 90 is PWM (Pulse Width Modulation) controlled and the image pick-up element 88 is cooled, while the temperature of the image pick-up element 88 detected by the temperature sensor 91 is monitored, so that the temperature of the image pick-up element 88 is maintained at a cooled temperature instructed by the image processing device 100.

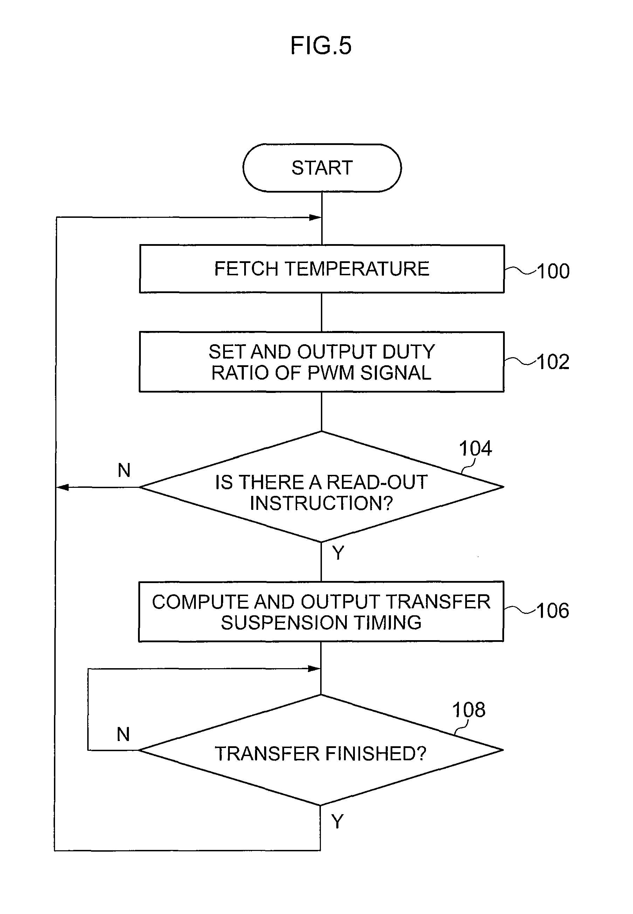

Read-out time setting processing, that is executed at the controller 80, is described next as the operation of the present exemplary embodiment, with reference to the flowchart shown in Fig. 5.

Note that the flowchart shown in Fig. 5 is executed when the power supply of the imaging section 30 is turned on. Further, the flowchart shown in Fig. 5 shows, among the processings that are executed at the controller 80, only some of the processings relating to PWM control of the cooling element 90 and transfer of the image pick-up signal from the image pick-up element 88.

First, in step 100, the controller 80 fetches the temperature of the image pick-up element 88 that is detected by the temperature sensor 91.

In step 102, on the basis of the fetched temperature, a duty ratio D of the PWM signal that controls the cooling element 90 is set, and a PWM signal of the set duty ratio D is outputted to the cooling element 90. When the temperature detected by the temperature sensor 91 is higher than the cooled temperature instructed by the image processing device 100, the image pick-up element 88 must be cooled, and therefore, the duty ratio D is set to be high. When the temperature detected by the temperature sensor 91 is lower than the cooled temperature instructed by the image processing device 100, there is no need to cool the image pick-up element 88, and therefore, the duty ratio D is set to be low. The duty ratio D can be set by, for example, a computational formula or table data that is set in advance and expresses the relationship of correspondence between the temperature detected at the temperature sensor 91 and the duty ratio D.

In step 104, it is judged whether or not reading-out of a picked-up image has been instructed from the image processing device 100. If reading-out has been instructed, the routine moves on to step 106. On the other hand, if reading-out has not been instructed, the routine moves on to step 100, and processings similar to those described above are repeated.

In step 106, on the basis of the duty ratio D computed in step 102, a transfer suspension timing of the image pick-up signal is computed so that the transfer of the image pick-up signal is suspended at a timing that includes at least one of the rise and the fall of the PWM control signal. Explanation of the computing of the transfer suspension timing is given hereinafter. Note that, in order to more effectively prevent noise from affecting the image pick-up signal, it is preferable that transfer of the image pick-up signal be suspended at both timings of the rise and the fall of the PWM control signal. In the present exemplary embodiment, explanation is given of a case in which control is carried out such that transfer of the image pick-up signal is suspended at both timings of the rise and the fall of the PWM control signal.

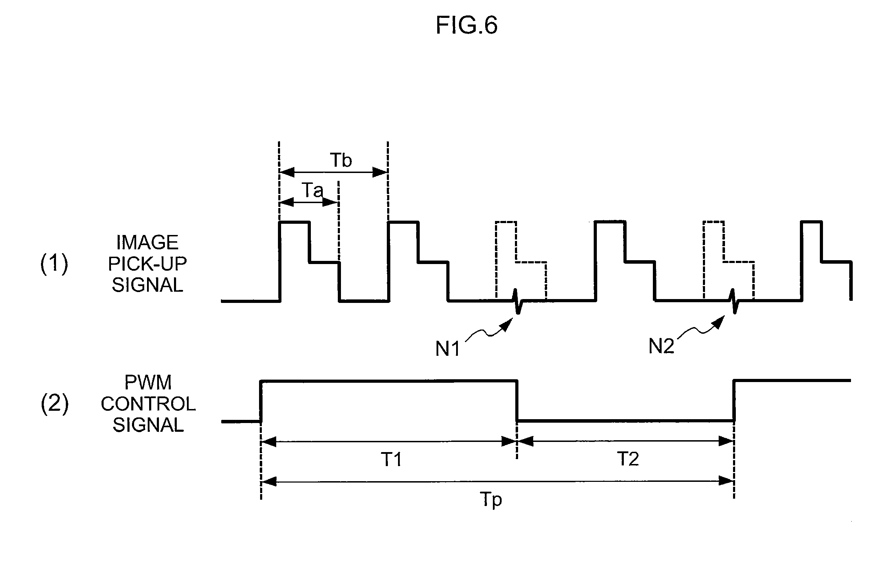

Fig. 6(1) shows an example of the waveform of the image pick-up signal outputted from the image pick-up element 88, and Fig. 6(2) shows an example of the waveform of the PWM control signal for PWM-controlling the cooling element 90.

As shown in Fig. 6(1), the pulse width of the image pick-up signal is Ta and the transfer cycle is Tb. As shown in Fig. 6(2), the cycle of the PWM signal is Tp, the time period in which the PWM control signal is high-level, i.e., the time period in which the cooling element 90 is on and the image pick-up element 88 is cooled, is T1, the time period in which the PWM control signal is low-level is T2, and the duty ratio is D.

In this case, T1 and T2 are computed by the following formulas.

$$T1 = D \times Tp \qquad \ldots(1)$$

$$T2 = (1-D)\times Tp \qquad \ldots(2)$$

Accordingly, by suspending the transfer of the image pick-up signal at the timing at which the PWM control signal falls after rising, i.e., the timing at which the time T1 has elapsed from the start of the cycle Tp of the PWM control signal, noise N1 that arises when the PWM control signal falls can be prevented from being superposed on the image pick-up signal as shown in Fig. 6(1). Further, by suspending the transfer of the image pick-up signal at the timing at which the PWM control signal rises after falling, i.e., at the timing (the interval of the cycle Tp) at which the time T2 elapses after the time T1 has elapsed, noise N2 that is generated when the PWM control signal rises can prevented from being superposed on the image pick-up signal as shown in Fig. 6(1).

In step 106, T1 and T2 (or Tp) that were computed by above formulas (1) and (2) are outputted to the timing generator 86 as transfer suspension timings. Due thereto, in the transfer time period of the image pick-up signal, each time that the timing when the time T1 elapses from the start of the cycle Tp of the PWM control signal arrives and the timing when the time T2 elapses arrives, the timing generator 86 outputs timing signals to the image pick-up element 88 so that transfer of the image pick-up signal at those timings is suspended. Therefore, noise can be prevented from being superposed on the image pick-up signal, and the S/N ratio of the image can be prevented from decreasing.

In step 108, it is judged whether or not transfer of the image pick-up signal has ended. If transfer has not ended, the routine stands by until transfer ends. When transfer has ended, the routine returns to step 100, and processings similar to those described above are repeated.

In this way, in the present exemplary embodiment, on the basis of the duty ratio of the PWM control signal, the timings of the rise and fall of the PWM control signal are computed, and transfer of the image pick-up signal at these timings is suspended. Therefore, because the duty ratio of the PWM control signal does not change, the temperature of the image pick-up element 88 does not rise too much, and conversely, does not fall too much, and the image pick-up element 88 can be maintained at the appropriate temperature. Further, noise can be prevented from being superposed on the image pick-up signal, and the S/N ratio of the image can be prevented from decreasing.

Note that, during the time period when the image pick-up signal is outputted from the image pick-up element 88, i.e., during the transfer time period of the image pick-up signal, when the frequency of the PWM control signal is high, i.e., when the cycle Tp is short, the number of times that transfer of the image pick-up signal is suspended increases, and the transfer time period becomes longer. Thus, the frequency of the PWM control signal during the transfer time period of the image pick-up signal may be made to be lower than the frequency of the PWM control signal during non-transfer time periods in which an image pick-up signal is not outputted from the image pick-up element 88. Due thereto, the number of times that transfer of the image pick-up signal is suspended can be reduced.

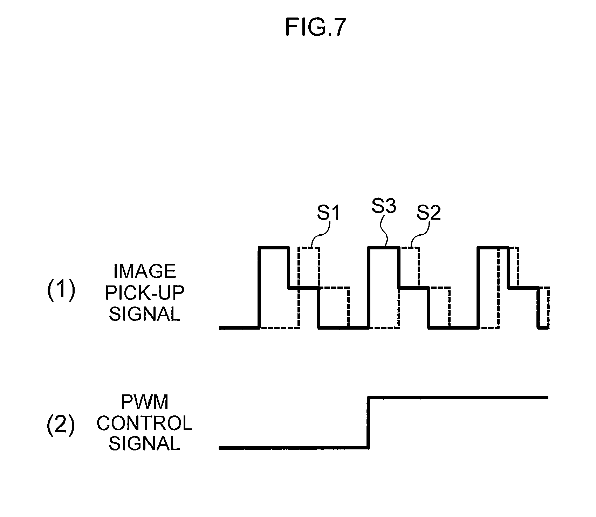

Further, as shown by the dashed line in Fig. 7 (1), in a case in which the timing of the start of transfer of the image pick-up signal is offset from the timing of the rise of the PWM control signal, i.e., in a case in which the cycle Tp of the PWM control signal is not an integer multiple of the transfer cycle Tb of the image pick-up signal, or in a case in which the phase of the image pick-up signal and the phase of the PWM signal do not coincide, there is the possibility that noise that is generated at the timing of the rise of the PWM control signal will affect both image pick-up signals S1, S2 that are before and after that rise timing. In this case, transfer of two times, i.e., transfer of the image pick-up signals S1, S2, may have to be suspended. In contrast, as shown by the solid line in Fig. 7(1), in a case in which the timing of the rise of the image pick-up signal coincides with the timing of the rise of the PWM control signal, i.e., in a case in which the cycle Tp of the PWM control signal is an integer multiple of the transfer cycle Tb of the image pick-up signal, and in a case in which the phase of the image pick-up signal and the phase of the PWM signal coincide, there is a high possibility that the noise that is generated at the timing of the rise of the PWM control signal will affect only image pick-up signal S3 at the timing of the rise thereof. Note that there is no need for the phases to coincide completely, and it suffices to carry out phase adjustment such that at least one of the timing of the rise and the timing of the fall of the PWM signal is included within the resetting time period of the image pick-up signal, i.e., the time period in which the signal at the first half in the time period Ta shown in Fig. 6(1) is high.

Thus, the cycle Tp of the PWM control signal and the transfer cycle Tb of the image pick-up signal may be set such that the timing of the rise of the PWM control signal coincides with the timing of the start of the transfer of the image pick-up signal, i.e., so that the cycle Tp of the PWM control signal becomes an integer multiple of the transfer cycle Tb of the image pick-up signal, and at least one of the phase of the image pick-up signal and the phase of the PWM signal may be adjusted such that at least one of the timing of the rise and the timing of the fall of the PWM signal is included in the resetting time period of the image pick-up signal. Due thereto, the number of times that transfer of the image pick-up signal is suspended can be reduced as much as possible.

Note that the present exemplary embodiment describes a case in which the present invention is applied to a device that images a chemiluminescent sample or a fluorescent sample. However, the present invention is not limited to the same, and can be applied also to devices that capture microscopic images and devices that capture images of celestial bodies.

Further, the structure (see Fig. 1 through Fig. 4) of the imaging system 1 described in the present exemplary embodiment is an example, and unnecessary portions may be deleted therefrom, or new portions may be added thereto, within a scope that does not deviate from the gist of the present invention.

Further, the flow of the processings (see Fig. 5) of the control program described in the present exemplary embodiment is also an example. Unnecessary steps may be eliminated therefrom, new steps may be added thereto, or the order of the processings may be rearranged, within a scope that does not deviate from the gist of the present invention.

In accordance with the first aspect of the present invention, transfer of the image pick-up signal is controlled such that transfer of the image pick-up signal is suspended at a timing that includes at least one of the rise and the fall of the pulse width modulation signal at the time of pulse width modulation controlling the cooling means that cools the image pick-up element. Therefore, when the driving time of the image pick-up element is long such as, in particular, during continuous imaging or the like, the temperature of the image pick-up element can be prevented from rising too much, or conversely, falling too much. While the image pick-up element is controlled to an appropriate temperature, noise can be prevented from becoming mixed-in with the captured image.

As a second aspect of the present invention, the transfer control means may control transfer of the image pick-up signal on the basis of a duty ratio of the pulse width modulation signal, such that transfer of the image pick-up signal is suspended at a timing that includes at least one of the rise and the fall of the pulse width modulation signal.

As a third aspect of the present invention, the transfer control means may control a frequency of the pulse width modulation signal, during a transfer time period of the image pick-up signal, to be lower than a frequency of the pulse width modulation signal during non-transfer time periods.

As a fourth aspect of the present invention, the transfer control means may set a transfer cycle of the image pick-up signal and a cycle of the pulse width modulation signal such that the timing of the rise of the pulse width modulation signal coincides with a transfer start timing of the image pick-up signal, and may carry out phase adjustment of at least one of a phase of the image pick-up signal and a phase of the PWM signal such that at least one of the timing of the rise and the timing of the fall of the PWM signal is included in a resetting time period of the image pick-up signal.

In accordance with the present invention, there is the effect that noise can be prevented from becoming mixed-in with a captured image, while an image pick-up element is controlled to an appropriate temperature.

**Claims**

1. An imaging device comprising:

   an image pick-up element that picks-up an image of a subject, and transfers an image pick-up signal that has been picked-up;
   cooling means for cooling the image pick-up element;
   a temperature sensor that detects a temperature of the image pick-up element;
   pulse width modulation control means for controlling the cooling means by a pulse width modulation signal, on the basis of the temperature detected by the temperature sensor; and
   transfer control means for controlling transfer of the image pick-up signal such that transfer of the image pick-up signal is suspended at a timing that includes at least one of a rise and a fall of the pulse width modulation signal.

2. The imaging device of claim 1, wherein the transfer control means controls transfer of the image pick-up signal on the basis of a duty ratio of the pulse width modulation signal, such that transfer of the image pick-up signal is suspended at a timing that includes at least one of the rise and the fall of the pulse width modulation signal.

3. The imaging device of claim 1 or claim 2, wherein the transfer control means controls a frequency of the pulse width modulation signal, during a transfer time period of the image pick-up signal, to be lower than a frequency of the pulse width modulation signal during non-transfer time periods.

4. The imaging device of any one of claim 1 through claim 3, wherein the transfer control means sets a transfer cycle of the image pick-up signal and a cycle of the pulse width modulation signal such that the timing of the rise of the pulse width modulation signal coincides with a transfer start timing of the image pick-up signal, and carries out phase adjustment of at least one of a phase of the image pick-up signal and a phase of the PWM signal such that at least one of the timing of the rise and the timing of the fall of the PWM signal is included in a resetting time period of the image pick-up signal.

5. An imaging program for causing a computer to function as the pulse width modulation control means and the transfer control means of any one of claim 1 through claim 4.

6. An imaging method comprising:

   on the basis of a temperature that is detected by a temperature sensor that detects a temperature of an image pick-up element that picks-up an image of a subject and transfers an image pick-up signal that has been picked-up, controlling a cooling means for cooling the image pick-up element by a pulse width modulation signal; and

controlling transfer of the image pick-up signal such that transfer of the image pick-up signal is suspended at a timing that includes at least one of a rise and a fall of the pulse width modulation signal.

7. A computer-readable storage medium storing a program for causing a computer to execute an imaging method, the imaging method comprising:

on the basis of a temperature that is detected by a temperature sensor that detects a temperature of an image pick-up element that picks-up an image of a subject and transfers an image pick-up signal that has been picked-up, controlling a cooling means for cooling the image pick-up element by a pulse width modulation signal; and

controlling transfer of the image pick-up signal such that transfer of the image pick-up signal is suspended at a timing that includes at least one of a rise and a fall of the pulse width modulation signal.

FIG.1

EP 2 506 564 A1

# FIG.2

# FIG.3

EP 2 506 564 A1

FIG.4

# FIG.5

```
                    ┌─────────────┐
                    │    START    │
                    └─────────────┘
                           │
                           ▼
        ┌──────────────────────────────────┐
        │       FETCH TEMPERATURE          │──100
        └──────────────────────────────────┘
                           │
                           ▼
        ┌──────────────────────────────────┐
        │       SET AND OUTPUT DUTY        │──102
        │      RATIO OF PWM SIGNAL         │
        └──────────────────────────────────┘
                           │
                           ▼
                  ╱────────────────╲      104
          N      ╱  IS THERE A READ-OUT ╲
        ◄───────◄    INSTRUCTION?        ╲
                  ╲                     ╱
                   ╲──────────────────╱
                           │ Y
                           ▼
        ┌──────────────────────────────────┐
        │  COMPUTE AND OUTPUT TRANSFER      │──106
        │       SUSPENSION TIMING          │
        └──────────────────────────────────┘
                           │
                           ▼
                  ╱────────────────╲      108
          N      ╱                   ╲
        ◄───────◄  TRANSFER FINISHED? ╲
                  ╲                   ╱
                   ╲────────────────╱
                           │ Y
```

# FIG.6

# FIG.7

(1) IMAGE PICK-UP SIGNAL

(2) PWM CONTROL SIGNAL

**Europäisches Patentamt**
**European Patent Office**
**Office européen des brevets**

# EUROPEAN SEARCH REPORT

Application Number

EP 12 16 1186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | JP 2 113680 A (TOSHIBA CORP) 25 April 1990 (1990-04-25) * abstract * * ----- | 1-7 | INV. H04N5/357 |
| Y | EP 2 088 766 A1 (SONY CORP [JP]) 12 August 2009 (2009-08-12) * paragraphs [0013], [0017] * ----- | 1-7 | |
| Y | US 2009/046174 A1 (YONEDA KOUJIROU [JP] ET AL) 19 February 2009 (2009-02-19) * paragraphs [0012], [0016]; figure 3 * ----- | 1-7 | |
| Y | JP 2008 288689 A (PANASONIC CORP) 27 November 2008 (2008-11-27) * abstract * * ----- | 1-7 | |

TECHNICAL FIELDS
SEARCHED (IPC)

H04N

The present search report has been drawn up for all claims

| Place of search | Date of completion of the search | Examiner |
|---|---|---|
| The Hague | 11 July 2012 | Bequet, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 16 1186

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2012

| Patent document cited in search report | | | Publication date | Patent family member(s) | | | Publication date |
|---|---|---|---|---|---|---|---|
| JP | 2113680 | A | 25-04-1990 | NONE | | | |
| EP | 2088766 | A1 | 12-08-2009 | EP | 2088766 | A1 | 12-08-2009 |
| | | | | JP | 2009213106 | A | 17-09-2009 |
| | | | | KR | 20090086170 | A | 11-08-2009 |
| | | | | TW | 200943939 | A | 16-10-2009 |
| | | | | US | 2009195679 | A1 | 06-08-2009 |
| US | 2009046174 | A1 | 19-02-2009 | CN | 101341739 | A | 07-01-2009 |
| | | | | JP | 2007173953 | A | 05-07-2007 |
| | | | | US | 2009046174 | A1 | 19-02-2009 |
| | | | | WO | 2007072820 | A1 | 28-06-2007 |
| JP | 2008288689 | A | 27-11-2008 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005283322 A
- JP 2113680 A
- JP 2002290840 A
- JP 2008029816 A